(19) Europäisches Patentamt
European Patent Office
Office européen des brevets

(11) **EP 4 583 005 A1**

(12) **EUROPEAN PATENT APPLICATION**

(43) Date of publication:
**09.07.2025 Bulletin 2025/28**

(21) Application number: **25150247.2**

(22) Date of filing: **03.01.2025**

(51) International Patent Classification (IPC):
**G06N 3/0455** (2023.01)   **G06N 3/0475** (2023.01)
**G06N 3/084** (2023.01)   **G06N 3/096** (2023.01)
**G06N 3/047** (2023.01)

(52) Cooperative Patent Classification (CPC):
**G06N 3/084; G06N 3/0455; G06N 3/0475;
G06N 3/096;** G06N 3/047

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.01.2024 KR 20240002289**

(71) Applicant: **Samsung Electronics Co., Ltd.
Suwon-si, Gyeonggi-do 16677 (KR)**

(72) Inventors:
• **NAM, Junhyun
  16678 Suwon-si (KR)**
• **KO, Minsu
  16678 Suwon-si (KR)**
• **PARK, Sungun
  16678 Suwon-si (KR)**
• **SUH, Sungjoo
  16678 Suwon-si (KR)**
• **AHN, Minsu
  16678 Suwon-si (KR)**

(74) Representative: **Arnold & Siedsma
Bezuidenhoutseweg 57
2594 AC The Hague (NL)**

(54) **METHOD AND APPARATUS WITH AI MODEL TRAINING USING DOMAIN SIMILARITY**

(57)    A method and apparatus for training a pre-trained AI model are provided. The method for training the pre-trained AI model includes: generating, by the pre-trained AI model, a first image and a second image; determining a first gradient of a first loss function of the first image and a second gradient of a second loss function of the second image; determining a similarity between the first gradient and the second gradient; and updating the pre-trained AI model based on the similarity, wherein the first image and the second image respectively correspond to different domains.

FIG. 1

**Description**

BACKGROUND

1. Field

The present disclosure relates to a method and an apparatus with AI model training of a pre-trained AI model using domain similarity.

2. Related Art

Diffusion probabilistic models are used as generative artificial intelligence (generative AI) models in the field of image generation. Compared to generative adversarial networks (GANs), diffusion probability models have the advantage of being able to finely adjust image generation through various conditions such as text and region designation. However, since the diffusion probability model generates images step by step from noise during training, the computational amount required is large and training may take a long time.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method for training a pre-trained artificial intelligence (AI) model includes: generating, by the pre-trained AI model, a first image and a second image; determining a first gradient of a first loss function of the first image and a second gradient of a second loss function of the second image; determining a similarity between the first gradient and the second gradient; and updating the pre-trained AI model based on the similarity, wherein the first image and the second image respectively correspond to different domains.

The first image may correspond to (belong to/relate to/be generated as an image in) a pre-training domain of the pre-trained AI model and the second image corresponds to a target domain that is different from the pre-training domain.

The pre-trained AI model may include layers, and the method may further include: determining first gradients, including the first gradient, of first loss functions, including the first loss function, of the layers, respectively; determining second gradients, including the second gradient, of the second loss functions, including the second loss function, of the respective layers of the AI model: determining the first gradients from respective partial derivatives of the respective first loss functions with respect to parameters of layers in the pre-trained AI model; and determining the second gradients from respective partial derivatives of the respective second loss functions with respect to the parameters of the layers in the pre-trained AI model.

The method may further include updating weights of the layers according to the similarities of the layers, respectively.

The updating the weights of a given one of the layers may be based on adjusting a gradient of the given one of the layers based on the similarity corresponding to the given one of the layers.

Adjusting the gradient may be based on a product of the similarity of the given one of the layers and the second gradient corresponding to the given one of the layers.

In another general aspect, an apparatus for training a pre-trained artificial intelligence (AI) model includes: one or more processors and a memory, wherein the memory stores instructions configured to cause the one or more processors to perform a process including: generating image pairs each including a first image in a pre-training domain and a second image in a target domain, the image pairs generated by respectively corresponding pre-trained AI models, the pre-trained AI models including the pre-trained AI model, wherein the pre-training domains are the same or are different from each other; determining similarities between the target domain and the pre-training domains based on the respective image pairs, the similarities respectively corresponding to the pre-trained AI models; selecting the pre-trained AI model, from among the pre-trained AI models, by comparing the similarities; and performing transfer learning to the target domain on the selected pre-trained AI model.

The determining of the similarities between the target domain and the pre-training domains may include, for each pair: determining a first gradient of a first loss function of the first image and a second gradient of a second loss function of the second image; and determining the similarity as between the first gradient and the second gradient.

The pre-trained AI model may be selected based on its image pair having the greatest similarity.

The process may further include performing the transfer learning to the target domain by updating the selected pre-trained AI model based on the similarity of its image pair.

The determining of the first gradient of the loss function of the first image and the second gradient of the loss function of the second image for each pair may include: determining the first gradient from a partial derivative of the first loss function with respect to parameters of layers in the corresponding pre-trained AI model; and determining the second gradient from a partial derivative of the second loss function with respect to parameters of layers in the corresponding pre-trained AI model.

For each image pair: the determining of the corresponding similarity between the target domain and the corresponding pre-training domain may include calculating cosine similarities for layers between the first gradient and the second gradient.

The selected pre-trained AI model may be selected based on having the greatest similarity according to the comparing, and the performing the transfer learning may include: updating a gradient of the selected pre-trained AI model based on a cosine similarity for the corresponding first gradient and the corresponding second gradient; and updating parameters of a corresponding layer in the selected pre-trained AI model using the updated gradient.

The process may further include: updating the gradient based on a product of the cosine similarity and the second gradient.

In another general aspect, there is a system for training an artificial intelligence (AI) model that has been pre-trained in a pre-training domain to learn a target domain, and the system includes: one or more processors; and memory, wherein the memory stores instructions configured to cause the one or more processors to perform a process including: generating, by the AI model, a first image in the pre-training domain and a second image in the target domain; generating a correlation value indication correlation between the pre-training domain and the target domain based on the first image in the pre-training domain and the second image in the target domain; and performing tuning to adapt the AI model to the target domain based on the correlation value.

The determining the correlation value may include determining a similarity between a first gradient of a first loss function corresponding to the generating of the first image and a second gradient of a second loss function corresponding to the generating of the second image.

The first gradient may be determined from a partial derivative of the first loss function with respect to parameters of layers in the AI model; and the second gradient is determined from a partial derivative of the second loss function with respect to the parameters of the layers of the AI model.

Similarities between the first gradient and the second gradient may be determined for the respective layers.

The second gradient may correspond to the target domain, and the performing tuning to adapt the AI model to the target domain based on the correlation value may include: updating gradient based on the similarity for each layer; and updating the parameters of the layers in the AI model using the updated gradient.

Further aspects are described by the following clauses:

Clause 1: A method for training a pre-trained artificial intelligence (AI) model, the method comprising: receiving, from the pre-trained AI model, a first image and a second image; determining a first gradient of a first loss function of the first image and a second gradient of a second loss function of the second image; determining a similarity between the first gradient and the second gradient; and updating the pre-trained AI model based on the similarity, wherein the first image and the second image respectively correspond to different domains.

Clause 2: The method of clause 1, wherein the first image corresponds to a pre-training domain of the pre-trained AI model and the second image corresponds to a target domain that is different from the pre-training domain.

Clause 3: The method of clause 1, wherein the determining a first gradient of a first loss function of the first image and a second gradient of a second loss function of the second image comprises: determining the first gradient from a partial derivative of the first loss function with respect to parameters of layers in the pre-trained AI model; and determining the second gradient from a partial derivative of the second loss function with respect to the parameters of the layers in the pre-trained AI model.

Clause 4: The method of clause 3, wherein the determining of the similarity between the first gradient and the second gradient comprises determining similarity for each layer between the first gradient and the second gradient.

Clause 5: The method of clause 4, wherein the updating of the pre-trained AI model based on the similarity comprises determining a reweighted gradient based on the similarity; and updating the parameters of the layers in the pre-trained AI model using the reweighted gradient.

Clause 6: The method of clause 5, wherein the reweighted gradient is determined as a product of the similarity for each layer and the second gradient.

Clause 7: An apparatus for training a pre-trained artificial intelligence (AI) model, the apparatus comprising: one or more processors and a memory, wherein the memory stores instructions configured to cause the one or more processors to perform a process comprising: receiving image pairs each comprising a first image corresponding to a pre-training domain and a second image corresponding to a target domain from each of a plurality of pre-trained AI models; determining similarities between the pre-training domain and the target domain based on the respective image pairs; and selecting at least one pre-trained AI model from among the plurality of pre-trained AI models by comparing the similarities respectively corresponding to each of the plurality of pre-trained AI models to update the selected at least one pre-trained AI model.

Clause 8: The apparatus of clause 7, wherein the determining of the similarities between the pre-training domain and the target domain based on the respective image pairs comprises: determining a first gradient of a first loss function of the first image and a second gradient of a second loss function of the second image; and determining similarity between the first gradient and the second gradient.

Clause 9: The apparatus of clause 8, wherein the selecting of at least one pre-trained AI model from among the plurality of pre-trained AI models by comparing the similarities respectively corresponding to each of the plurality of pre-trained AI models comprises selecting the pre-trained AI model corresponding to the greatest similarity.

Clause 10: The apparatus of clause 9, wherein the process further includes updating the selected pre-trained AI model based on the greatest similarity.

Clause 11: The apparatus of clause 8, wherein the determining of the first gradient of the first loss function of the first image and the second gradient of the second loss function of the second image comprises determining the first gradient from a partial derivative of the first loss function with respect to the parameters of the layers in the pre-trained AI model; and determining the second gradient from the partial derivative of the second loss function with respect to the parameters of the layers in the pre-trained AI model.

Clause 12: The apparatus of clause 10, wherein the determining of the similarities between the pre-training domain and the target domain based on the respective image pairs further comprises calculating a cosine similarity for each layer between the first gradient and the second gradient.

Clause 13: The apparatus of clause 12, wherein the updating of the selected pre-trained AI model based on the greatest similarity comprises determining a reweighted gradient based on the cosine similarity for each layer between the first gradient and the second gradient; and updating the parameters of the layers in the selected pre-trained AI model using the reweighted gradient.

Clause 14: The apparatus of clause 13, wherein the determining of the reweighted gradient comprising: determining the reweighted gradient based on a product of the cosine similarity for each layer and the second gradient.

Clause 15: A system for training an artificial intelligence (AI) model that has been pre-trained in a pre-training domain to learn a target domain that is different from the pre-training domain, the system comprising: one or more processors; and memory, wherein the memory stores instructions configured to cause the one or more processors to perform a process including: receiving, from the AI model, a first image in the pre-training domain and a second image in the target domain; determining a correlation value indicating a correlation between the pre-training domain and the target domain based on the first image in the pre-training domain and the second image in the target domain; and performing tuning to adapt the AI model to the target domain based on the correlation value.

Clause 16: The system of clause 15, wherein the determining the correlation value comprises determining a similarity between a first gradient of a first loss function corresponding to the generating of the first image and a second gradient of a second loss function corresponding to the generating of the second image.

Clause 17: The system of clause 16, wherein the first gradient is determined from a partial derivative of the first loss function with respect to parameters of layers in the AI model; and the second gradient is determined from a partial derivative of the second loss function with respect to the parameters of the layers of the AI model.

Clause 18: The system of clause 17, wherein similarities between the first gradient and the second gradient are determined for the respective layers.

Clause 19: The system of clause 18, wherein the second gradient corresponds to the target domain, and wherein the performing tuning to adapt the AI model to the target domain based on the correlation value comprises: updating gradient based on the similarity for each layer; and updating the parameters of the layers in the AI model using the updated gradient.

Clause 20: The system of clause 19, wherein the updated gradient is determined based on a multiplication of the similarity for each layer and the second gradient.

The updated gradient may be determined based on a multiplication of the similarity for each layer and the second gradient.

Other features and aspects will be apparent from the following detailed description, the drawings, and the claims.

BRIEF DESCRIPTION OF THE DRAWINGS

FIG. 1 illustrates a system for training a pre-trained AI model according to one or more embodiments.
FIG. 2 illustrates a reverse denoising process according to one or more embodiments.
FIG. 3 illustrates a method for training a pre-trained AI model according to one or more embodiments.
FIG. 4 illustrates a system for training a pre-trained AI model according to one or more embodiments.

FIG. 5 illustrates a method for training a pre-trained AI model according to one or more embodiments.

FIG. 6 illustrates an example of cosine similarities, for respective model layers, between the gradients of the loss function, according to one or more embodiments.

FIG. 7 illustrates a defect inspection system in a semiconductor manufacturing process according to one or more embodiments.

FIG. 8 illustrates an encoder-decoder neural network structure according to one or more embodiments.

FIG. 9 illustrates a training device according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

To shorten the training time of diffusion models, a method of adapting a pre-trained model with a large amount of data to a new target domain through fine-tuning may be used. Low-rank adaptation (LoRA) and bias-terms fine-tuning (BitFit) are methods for fine-tuning existing transformer-based large-scale language models. Such a method may adapt an artificial intelligence (AI) model to the target domain with less than 1% parameter learning compared to existing models. A domain may for example relate to a certain type of images, such as images of nature, mountain landscapes, desert landscapes, (types of/specific) plants, (types of) dogs, (types of) architecture, (types of) semiconductors, (types of) playgrounds, (types of) human faces, (types of) interiors, (types of) art, etc.

Artificial intelligence models (AI models) of the present disclosure may learn at least one task and can be implemented as a computer program executed by a processor. The task learned by an AI model may be a problem to be solved through machine learning or a work to be performed through machine learning. AI models may be implemented as computer programs that run on computing devices, downloaded over a network, or sold in a product form. Alternatively, the AI model may be connected to various devices through a network. Also, the AI model may be interoperable with various devices through a network.

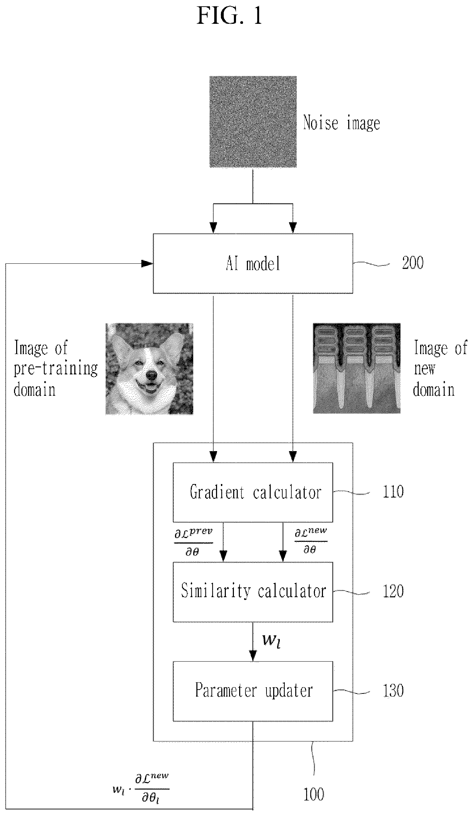

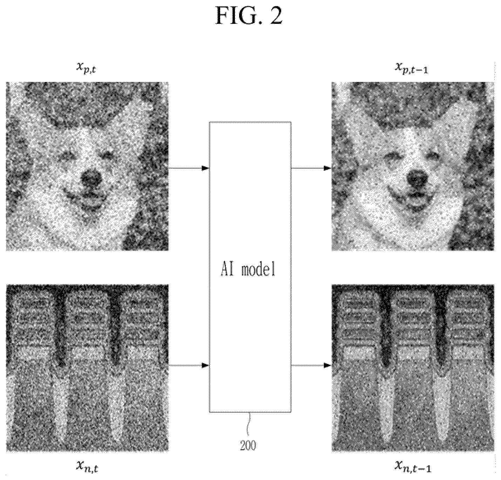

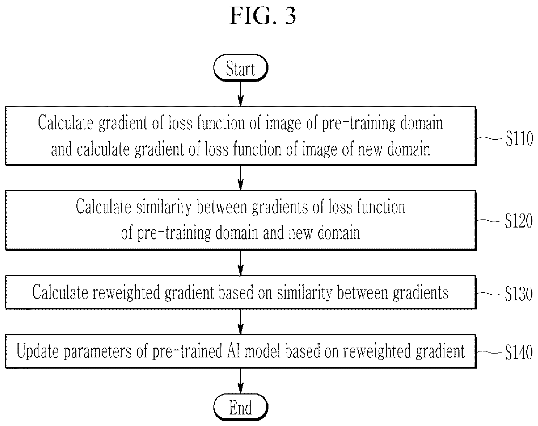

FIG. 1 illustrates a system for training a pre-trained AI model according to one or more embodiments, FIG. 2 illustrates a reverse denoising process according to one or more embodiments, and FIG. 3 illustrates a method for training a pre-trained AI model according to one or more embodiments.

In some embodiments, a training device 100 may perform transfer learning based on the relationship or similarity between a target domain and a pre-training domain of a pre-trained AI model 200. The target domain is a different domain from the pre-training domain (meaning a domain trained into the model before the transfer learning is performed, i.e. a domain in which the model was pre-trained/already trained), and the training device 100 may perform the transfer learning on the pre-trained AI model 200 to adapt the pre-trained AI model 200 to the target domain. For example, the training device 100 may fine-tune the pre-trained AI model 200 based on a similarity between (i) a gradient of a loss function determined based on an image corresponding to the pre-training domain and (ii) the gradient of the loss function determined based on an image corresponding to the target domain.

In some embodiments, the pre-trained AI model 200 may be a generative diffusion model that generates (infers) images of the pre-training domain from noise images. The AI model 200 may be pre-trained through a forward diffusion process and a reverse denoising process.

In the forward diffusion process, the AI model 200 may generate a noise image $x_T$ by successively adding random noise to an input image $x_0$ of the pre-training domain. At the t-th step of T steps ($1 \leq t \leq T$) of the forward diffusion process, noise sampled from a fixed normal distribution is added to the noised image.

In the reverse of the noising process, that is, in the denoising process (reverse diffusion), it is learned how to denoise the image. The noise image $x_T$ is inputted to the AI model 200, which in turn may generate a result image $x_0'$ with a probability distribution similar to the input image by removing noise with a normal distribution from the noise image $x_T$. In the denoising process (reverse diffusion), noise sampled from a learned normal distribution may be subtracted from the image at each step. The AI model 200 may be pre-trained through updating parameters (e.g., average $m$ and standard deviation $\sigma$ of a normal distribution) that represent the probability distribution from which noise to be subtracted from the image is sampled.

The training device 100 may determine a loss function $\mathcal{L}$ based on the image $x_t$ of step t to which noise randomly sampled from a normal distribution $\mathcal{N}$ (0, I) (average = 0, standard deviation = I) is added, as in Equation 1 below.

Equation 1

$$\mathcal{L} = \mathbb{E}_{t \sim [1,T], x_0, \epsilon_t}[\|\epsilon_t - \epsilon_\theta(x_t, t)\|^2]$$
$$= \mathbb{E}_{t \sim [1,T], x_0, \epsilon_t}\left[\left\|\epsilon_t - \epsilon_\theta\left(\sqrt{\overline{\alpha_t}}x_0 + \sqrt{1 - \overline{\alpha_t}}\epsilon_t, t\right)\right\|^2\right]$$

In Equation 1, $\varepsilon_t$ is the noise added to the image $x_0$ at the t-th step, and $\varepsilon_\theta(x_t, t)$ is the noise of an image $x_{t-1}$ generated by the AI model 200 when the image $x_t$ is input to the AI model 200 at the t-th step. That is, by the reverse denoising process, the training device 100 may learn the normal distribution of noise added to the image in the forward diffusion process from an image $x_{t-1}$ to the image $x_t$ based on the difference between the image $x_{t-1}$ and the image $x_t$ output from the AI model 200 when the image $x_t$ of an arbitrary step t is input to the AI model 200.

$x_t$ is an image sampled at an arbitrary step t and is represented by Equation 2 below.

Equation 2

$$x_t = \sqrt{\overline{\alpha_t}}\, x_0 + \sqrt{1 - \overline{\alpha_t}}\, \epsilon_t$$

In Equation 2, $\alpha_t$ is a value (serving as a blending factor) determined by a parameter $\beta_t$ indicating the size of noise to be added to the image, $\alpha_t = 1 - \beta_t$, and $\overline{\alpha_t} = \prod_{s=1}^{t} \alpha_s$.

Referring to FIG. 1, the training device 100 may include a gradient calculator 110, a similarity calculator 120, and a parameter updater 130.

The gradient calculator 110 may calculate a gradient of a loss function of a first image in the pre-training domain and a gradient of a loss function of a second image in the target domain; the images generated by the pre-trained AI model 200. The pre-trained AI model 200 may generate the first image in the pre-training domain and the second image in the target domain through reverse denoising, and transmit the first image and the second image to the gradient calculator 110 of the training device 100.

In some embodiments, the first image in the pre-training domain may have the same semantics as an image in the pre-training domain. Further, the second image in the target domain may have the same semantics as an image belonging to the target domain. For example, the pre-training domain may be a natural domain corresponding to/comprising/related to images of nature and the target domain may be a semiconductor domain corresponding to/comprising/related to semiconductor images. For example, the pre-training domain may contain different types of images than semiconductor images.

FIG. 2 shows the first image in the pre-training domain (top) and the second image in the target domain (bottom) (both generated by the pre-trained AI model 200) at an arbitrary step of the reverse denoising process as performed by the training device 100 are shown.

In FIG. 2, when an image $x_{p,t}$ with noise of step t added to an image $x_{p,0}$ belonging to a pre-training domain ("p" standing for "previous", as in the previous/pre-trained domain) is input to the pre-trained AI model 200, the pre-trained AI model 200 generates an image $x_{p,t-1}$ in the pre-training domain.

In addition, when an image $x_{n,t}$ with noise of step t added to an image $x_{n,0}$ belonging to the target domain ("n" standing for "new", as in the new/target domain) is input to the pre-trained AI model 200, the pre-trained AI model 200 generates an image $x_{n,t-1}$ in the target domain.

In FIG. 2, it is emphasized that one step of noise is removed in $x_{p,t-1}$ and one step of noise is removed from $x_{n,t-1}$ as compared to $x_{p,t}$ and $x_{n,t}$, respectively.

In some embodiments, the similarity calculator 120 may calculate the similarity between the gradient of the loss function calculated from the first image in the pre-training domain and the gradient of the loss function calculated from the second image in the target domain.

As described below, in some embodiments, the parameter updater 130 may calculate a reweighted gradient (e.g., update (e.g., apply a weight to) the aforementioned gradient corresponding to the second image) based on the similarity between the gradient of the loss function in the pre-training domain and the gradient of the loss function in the target domain, and may use the reweighted/updated gradient to update parameters (e.g., weights) of the pre-trained AI model 200.

Referring to FIG. 3, the gradient calculator 110 of the training device 100 may calculate loss functions of an image $x_0^{prev}$ in the pre-training domain and an image $x_0^{new}$ in the target domain generated by the pre-trained AI model 200, respectively, and calculate the gradient of the respective loss functions (S110).

Equation 3 below represents the loss function $\mathcal{L}^{prev}$ calculated for the image $x_0^{prev}$ in the pre-training/previous domain and the loss function $\mathcal{L}^{new}$ calculated for the image $x_0^{new}$ in the target/new domain, respectively.

Equation 3

$$\mathcal{L}^{prev} = \mathbb{E}\left[\left\|\epsilon_t - \epsilon_\theta\left(x_t^{prev}, t\right)\right\|^2\right]$$
$$= \mathbb{E}\left[\left\|\epsilon_t - \epsilon_\theta\left(\sqrt{\overline{\alpha_t}}x_0^{prev} + \sqrt{1 - \overline{\alpha_t}}\epsilon_t, t\right)\right\|^2\right]$$

$$\mathcal{L}^{new} = \mathbb{E}[\left\|\epsilon_t - \epsilon_\theta\left(x_t^{new}, t\right)\right\|^2]$$
$$= \mathbb{E}\left[\left\|\epsilon_t - \epsilon_\theta\left(\sqrt{\overline{\alpha_t}}x_0^{new} + \sqrt{1 - \overline{\alpha_t}}\epsilon_t, t\right)\right\|^2\right]$$

Referring to Equation 3, the loss function $\mathcal{L}^{prev}$ may include a term $\sqrt{\overline{\alpha_t}}x_0^{prev} + \sqrt{1 - \overline{\alpha_t}}\epsilon_t$, which represents an image of the t-th step in which noise is added to the image $x_0^{prev}$ in the pre-training domain. Further, the loss function $\mathcal{L}^{new}$ may include a term $\sqrt{\overline{\alpha_t}}x_0^{new} + \sqrt{1 - \overline{\alpha_t}}\epsilon_t$, which represents an image of the t-th step in which noise is added to the image $x_0^{new}$ in the target domain. Equations 4 and 5 below represent the gradient of the loss function in the pre-training domain and the gradient of the loss function in the target domain.

Equation 4

Gradient of loss function corresponding to pre-training domain: $\dfrac{\partial \mathcal{L}^{prev}}{\partial \theta}$

Gradient of loss function corresponding to target domain: $\dfrac{\partial \mathcal{L}^{new}}{\partial \theta}$

In some embodiments, the gradient calculator 110 may calculate the gradients respectively corresponding to the images of the pre-training domain and the target domain from a partial derivative of the loss functions for the parameters of the layers in the AI model 200. Equation 5 below represents the gradients of the loss functions for the parameter $\theta_l$ of the layer *l* determined by the gradient calculator 110.

Equation 5

Gradient of loss function for each layer corresponding to pre-training domain: $\dfrac{\partial \mathcal{L}^{prev}}{\partial \theta_l}$

Gradient of loss function for each layer corresponding to target domain: $\dfrac{\partial \mathcal{L}^{new}}{\partial \theta_l}$

Referring to FIG. 3, the similarity calculator 120 may calculate the similarity between the gradient of the loss function calculated from the first image in the pre-training domain and the gradient of the loss function calculated from the second image in the target domain (S 120). In Equation 5, "for each layer" refers to the gradients being computed on a per-layer basis, that is, the gradient of the loss function of the pre-training domain and the gradient of the loss function of the target domain may be calculated for each layer (not necessarily all) in the AI model.

In some embodiments, the similarity between (i) the gradient of the loss function calculated from the first image in the pre-training domain and (ii) the gradient of the loss function calculated from the second image in the target domain may be used as a numerical indicator representing the relationship (e.g., correlation) between the pre-training domain and the target domain by the training device 100. The similarity between the gradient of the loss function calculated from the first image in the pre-training domain and the gradient of the loss function calculated from the second image in the target domain may be determined by cosine similarity, as a non-limiting example. Other similarities may also be used, e.g., Euclidean distance.

In some embodiments, the similarity calculator 120 may determine the similarity for/at each layer based on the gradients of the loss functions related to the parameters of the layers included in the pre-trained AI model 200. The loss functions may also be computed for each layer (i.e., loss functions may be layer-specific). The update rate (or degree of update) of each layer in the pre-trained AI model 200 may be determined according to the similarities of the respective layers between the gradients of the loss functions in the pre-training domain and the target domain, which are determined by the similarity calculator 120. To be clear, here, the similarity weight, described next, involves a weight, which is a function of similarity, and which is used with respect to the gradients rather than weights of layers of the AI model 200.

Equation 6 below represents the layer-specific similarity weight $w_l$ as a function of the similarity between the gradients of the loss functions for the parameter $\theta_l$ of the layer $l$.

Equation 6

$$w_l = f\left(\text{Similarity}\left(\frac{\partial \mathcal{L}^{prev}}{\partial \theta_l}, \frac{\partial \mathcal{L}^{new}}{\partial \theta_l}\right)\right)$$

Regarding the function f(), generally, the similarity weight $w_l$ (determined according to the SimilarityU function of similarity between the gradients of the loss functions for the parameter $\theta_l$ of the layer $l$) may be determined by the function $f$ to be a relatively small value when the similarity between the gradient of the loss function computed for each layer in the pre-training domain and the gradient of the loss function computed for each layer in the target domain is relatively large (when they are similar). Conversely, the similarity weight $w_l$ may be determined by the function $f$ to be a relatively large value when the similarity between the gradient of the loss function for each layer in the pre-training domain and the gradient of the loss function for each layer in the target domain is relatively small (when they are dissimilar). To reiterate, target-domain and previous-domain gradients may be computed for each layer in the AI model, similarities (or similarity weights) may be computed for respective layers according to their respective pairs of loss functions.

Referring to FIG. 3, the parameter updater 130 may calculate a reweighted gradient (see Equation 7) based on the similarity (or specifically, the similarity weight) between the gradient of the loss function in the pre-training domain and the gradient of the loss function in the target domain (S130) , and update the parameters of the pre-trained AI model 200 using the reweighted gradient (S 140). This may be done for multiple (or all) layers of the pre-trained AI model 200.

In some embodiments, the parameter updater 130 may calculate the reweighted/updated gradients of the respective layers included in the pre-trained AI model 200 based on the similarity weights of the respective layers. Specifically, the reweighted/updated gradient of the $l$-th layer (in the pre-trained AI model 200) may be determined as the product of (i) the similarity weight $w_l$ for the $l$-th layer and (ii) the gradient of the loss function for the parameters of the $l$-th layer calculated from the image in the target domain, as shown in Equation 7 below (here, the computations for the $l$-th layer are representative of the computations of some or all layers of the pre-trained AI model 200).

Equation 7

$$w_l \cdot \frac{\partial \mathcal{L}^{new}}{\partial \theta_l}$$

Referring to Equation 7, the parameter updater 130 may update the parameters of respective layers in the pre-trained AI model 200 using the gradient corresponding to the new domain, but reweighted (or scaled) according to the similarity of gradients of the previous/pre-trained domain and the new domain.

When the similarities for respective layers between the gradients of the loss functions of the respective domains are relatively high, the corresponding similarity weights will be relatively low, and hence the corresponding layers will be updated relatively little, thus reducing memory loss of the pre-trained domain. When the similarities for respective layers between the gradients of the loss functions of the respective domains are relatively low, the corresponding similarity weights will be relatively high, and the corresponding layers will be updated relatively more, thus improving learning of the new domain.

For example, when high-frequency information between the pre-training domain and the target domain is relatively similar and the semantic information is relatively different, the layer corresponding to the high-frequency information may be updated relatively little and the layer corresponding to the semantic information may be updated relatively a lot according to the similarity for respective layers between the gradients of the loss functions.

As described above, the training device 100 performs an update for respective layers in the pre-trained AI model based on the similarity between the target domain and the pre-training domain used in pre-training of the AI model, thereby optimizing the update rate for respective layers in the pre-trained AI model and shortening the time required for the transfer

EP 4 583 005 A1

learning for the pre-trained AI model.

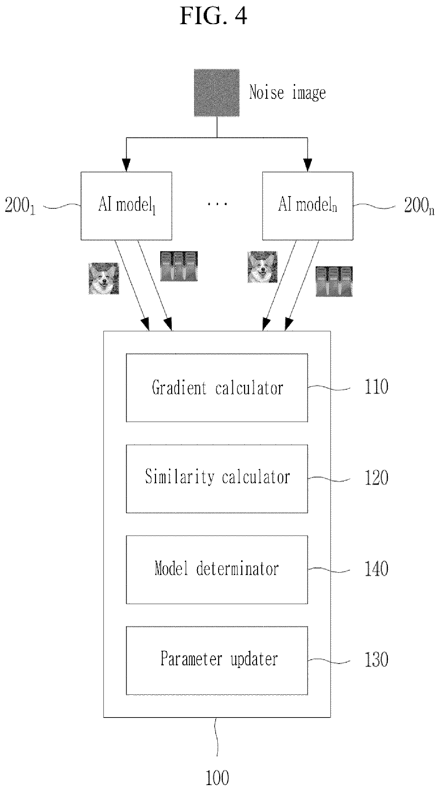

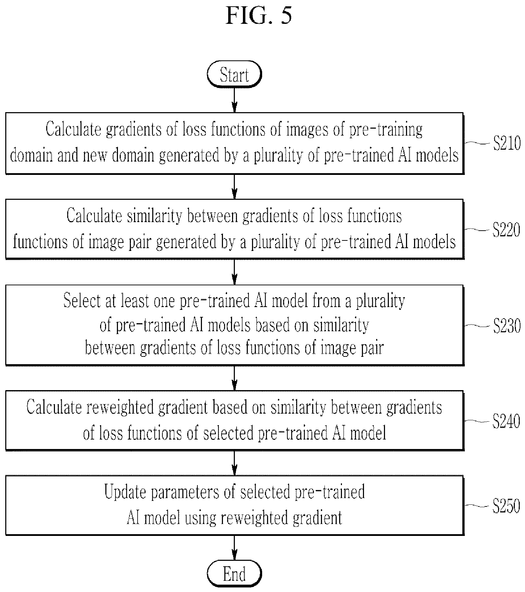

FIG. 4 illustrates a system for augmented training of a pre-trained AI model according to another embodiment and FIG. 5 illustrates a method for training a pre-trained AI model according to another embodiment.

In another embodiment, the training device 100 may receive image pairs comprising a first image in a pre-training domain and a second image in a target domain from respective pre-trained AI models $200_1$ to $200_n$, and may determine similarities (e.g., as per the Similarity() function above) between the pre-training domain and the target domain based on the image pairs for the respective AI models $200_1$ to $200_n$. Thereafter, the training device 100 may compare the similarities in the respective pre-trained AI models $200_1$ to $200_n$ to determine/select, from amongst them, at least one suitable or optimal AI model for transfer learning for adaptation to the target domain.

Referring to FIG. 4, the training device 100 may include a gradient calculator 110, a similarity calculator 120, and a parameter updater 130, and may further include a model determinator 140.

In another embodiment, the gradient calculator 110 may, for each AI model $200_1$ to $200_n$, calculate the gradients of the loss functions in the pre-training domain and the target domain based on the respective image pairs generated by the respective pre-trained AI models $200_1$ to $200_n$.

In another embodiment, the similarity calculator 120 may calculate similarities between the gradients of the loss functions of the image pairs of the respective pre-trained AI models $200_1$ to $200_n$. Based on the image pairs received from the respective pre-trained AI models $200_1$ to $200_n$, the similarity calculator 120 may calculate the similarities of the pre-training domain to the target domain for the respective pre-trained AI models $200_1$ to $200_n$.

In another embodiment, the model determinator 140 may compare the similarities corresponding to the respective pre-trained AI models $200_1$ to $200_n$, so that the model determinator 140 selects at least one optimal pre-trained AI model on which the domain adaptation through the transfer learning will be performed among the plurality of pre-trained AI models $200_1$ to $200_n$. Thereafter, the parameter updater 130 may update the parameters of the selected pre-trained AI model.

Referring to FIG. 5, the gradient calculator 110 of the training device 100 may calculate the gradients of the loss functions of the images of the pre-training domain and the target domain generated by the pre-trained AI models $200_1$ to $200_n$ (S210).

For example, after the first AI model $200_1$ is pre-trained in a domain including general images, the gradient calculator 110 may calculate a gradient of a loss function of a first image in the pre-training domain generated by the first AI model $200_1$ and a gradient of a loss function of a second image in the target domain (e.g., domain of the SEM images of the semiconductor). In addition, after the n-th AI model $200_n$ is pre-trained in a domain including the semiconductor images, the gradient calculator 110 may calculate a gradient of a loss function of a first image in the pre-training domain generated by the n-th AI model $200_n$ and a gradient of a loss function of a second image in the target domain. That is, the gradient calculator 110 may receive image pairs of images (one image in the pre-training domain and the other image in the target domain) from the AI models $200_1$ to $200_n$, where the AI models are pre-trained in different domains, respectively. And then, the gradient calculator 110 may calculate the gradients of the loss functions based on the received image pairs.

As a non-limiting example, at least one pre-trained AI model among the pre-trained AI models $200_1$ to $200_n$ may be pre-trained in the domain of the semiconductor images.

At this point, the semiconductor images belonging to the pre-training domain and images belonging to the target domain including semiconductor images may have a different class, respectively. For example, images of different types of semiconductors may belong to different domains, and even for images of the same type of semiconductor, images obtained by different measurement device (SEM, or the like) may belong to different domains. In other words, the pre-trained domains may be sub-domains of an encompassing domain.

Referring to FIG. 5, the similarity calculator 120 of the training device 100 may calculate similarities between the gradients of the loss functions of image pairs generated by the pre-trained AI models $200_1$ to $200_n$, respectively (S220). In some embodiments, the similarity calculator 120 of the training device 100 may determine the similarities as numerical indicators representing the relationship between the target domain and the pre-training domains of the respective pre-trained AI models $200_1$ to $200_n$.

Referring to FIG. 5, the model determinator 140 of the training device 100 may select at least one pre-trained AI model from the plurality of pre-trained AI models $200_1$ to $200_n$ based on the similarities between the gradients of the loss functions of the image pairs generated by the plurality of pre-trained AI models $200_1$ to $200_n$ (S230). In some embodiments, the model determinator 140 of the training device 100 may select the pre-trained AI model having the greatest similarity among the pre-trained AI models $200_1$ to $200_n$.

For example, when the similarity between the gradients of the loss functions of the image pair generated by a first pre-trained AI model is relatively large, it may be determined that the first pre-trained AI model may be relatively easily transferred to the target domain. Alternatively, when the similarity between the gradients of the loss functions of the image pair generated by a second pre-trained AI model is relatively large, it may be determined that the second pretrained AI model may adapt to the target domain with relatively fewer parameter updates.

On the contrary, when the similarity between the gradients of the loss functions of the image pair generated by a third pre-trained AI model is relatively small, it may be determined that it is relatively difficult to adapt the third pre-trained AI model to the target domain. Alternatively, when the similarity between the gradients of the loss functions of the image pair generated by a fourth pre-trained AI model is relatively small, the fourth pre-trained AI model may be determined to need a relatively large number of parameter updates to be able to adapt to the target domain.

Afterwards, the parameter updater 130 of the training device 100 may calculate the reweighted gradient (e.g., scale the gradient) based on the similarity between the gradients of loss functions of the image pair generated by the selected pre-trained AI model (S240), and update the parameters of the selected pre-trained AI model using the reweighted gradient (S250).

As described above, the training device 100 according to another embodiment may select a pre-trained AI model optimized for the target domain based on the similarity between the target domain and the pre-training domain among the plurality of pre-trained AI models. Accordingly, the speed of fine-tuning of the pre-trained AI model may be accelerated.

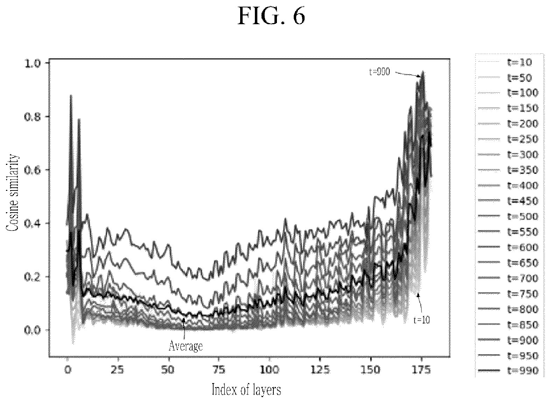

FIG. 6 illustrates an example of cosine similarities, for respective model layers, between the gradients of the loss functions, according to one or more embodiments.

In the graph of FIG. 6, the x-axis represents the index of the layer included in an example pre-trained AI model and the y-axis represents the cosine similarity of each of 175 layers of the example model. Referring to FIG. 6, it can be seen that as the time step of transfer learning by the training device 100 according to one or more embodiments increases, the cosine similarity between the gradients of the loss function in all layers of the AI example model increases.

Referring to FIG. 6, since the similarity between domains of layers of a smaller index (near an input layer) and a larger index (near an output layer) is relatively large, the training device 100 may perform tuning at a small update rate for the layer of the smaller index and the larger index. Since the similarity between domains of layers with indices of 50 to 75 is relatively small, the training device 100 may perform tuning at a large update rate for layers with the indices of 50 to 75.

Table 1 shows the results of transfer learning of the example AI model of FIG. 6, as pre-trained by using Flickr-Faces-HQ (FFHQ) dataset for domain adaptation to the Animal Faces-HQ (AFHQ) dataset.

Table 1

| Configuration (FFHQ → AFHQ) | Clean FID Indicator (steps) |
|---|---|
| From Scratch | 24.92 (300k) |
| Native Fine-tuning | 23.25 (3.0k) |
| Cosine similarity-based reweighting method | 22.65 (1.5k) |

Referring to Table 1, the cosine similarity-based reweighting method according to one or more embodiments shows the best clean Fréchet inception distance (FID) indicator compared to other learning methods in Table 1. The clean FID indicator represents the quality of an image generated by an AI model. The lower the clean FID indicator, the better the performance of the AI model that generated the image. Additionally, it can be seen that the cosine similarity-based reweighting method according to one or more embodiments may reach performance corresponding to the clean FID indicator with only 1500 steps, which is about half the steps of the native fine-tuning method.

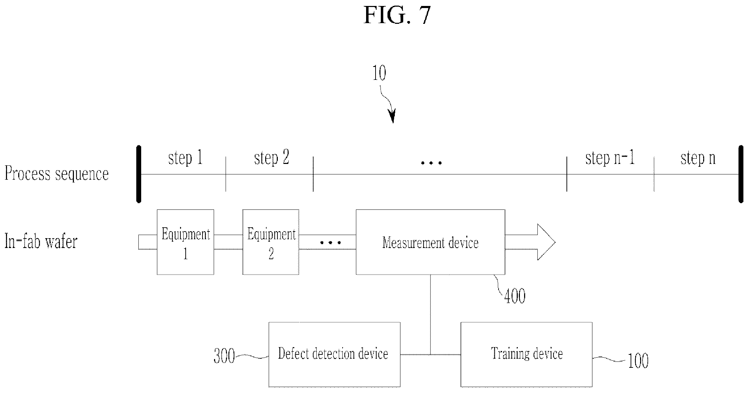

FIG. 7 illustrates a defect inspection system in a semiconductor manufacturing process according to one or more embodiments.

Referring to FIG. 7, a defect inspection system 10 for a semiconductor manufacturing process may include a defect detection device 300, a measurement device 400, and a training device 100.

The defect detection device 300 may detect defects from various images obtained during the semiconductor manufacturing process through inference based on one or more AI models. During the semiconductor manufacturing process, an in-fabrication (In-fab) wafer goes through several equipment, chambers, etc. The one or more AI models may include a classification AI model configured to classify images obtained during the manufacturing process and a generative AI model configured to generate images for learning the classification AI model. The generative AI model may generate images of a specific domain, and provide the images to the classification AI model, whereas the classification AI model may perform training for classification of images using the images generated by the generative AI model. In some embodiments, the generative AI model may be an image-to-image (im2im) translation model.

The measurement device 400 may perform measurements required during the semiconductor manufacturing process and obtain images of semiconductors, wafers and the like. The images obtained by the measurement device 400 may be classified as normal images and/or defective images by the classification AI model of the defect detection device 300.

The training device 100 may train the classification AI model and the generative AI model. Additionally, the training device 100 may adapt the pre-trained AI model to the domain including semiconductor images through transfer learning for a generative AI model that generates images for training the classification AI model. The pre-trained AI model may be pre-trained based on images from a natural domain or may be pre-trained based on images from a semiconductor domain that is different from the domain requiring fine-tuning.

In some embodiments, the training device 100 may determine correlation between the pre-training domain of the pre-trained AI model and the target domain of transfer learning, and may perform tuning to adapt the pre-trained AI model to the target domain based on the quantified correlation.

For example, a training device 100 may have the pre-trained AI model generate images of the pre-training domain and images of the target domain, and may relatively calculate the gradients of the loss functions based on the images of the pre-training domain and the images of the target domain. Afterwards, the training device 100 may perform the transfer learning on the trained AI model by using the similarity between the gradient of the loss function determined from the image in the pre-training domain and the gradient of the loss function determined from the image in the target domain as the quantified correlation between the pre-training domain and the target domain.

In some embodiments, the training device 100 may select at least one pre-trained AI model from a plurality of pre-trained AI models based on correlation between the pre-training domain of the pre-trained AI model and the target domain of the transfer learning, and perform transfer learning on the selected pre-trained AI model. The training device 100 may quantify the correlation between the pre-training domain of the pre-trained AI model and the target domain, and select at least one pre-trained AI model among the pre-trained AI models based on the correlation between the quantified domains.

As described above, the training device 100 according to one or more embodiments determines correlation between a pre-training domain of a pre-trained AI model and a target domain for transfer learning and performs layer-by-layer updates of the pre-trained AI model based on the correlation, so that the update rate for each layer of the pre-trained AI model may be optimized and the time required for the transfer learning for the pre-trained AI model may be shortened.

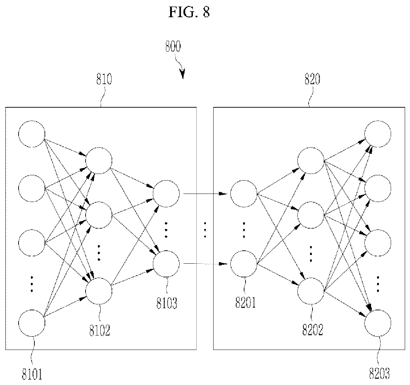

FIG. 8 illustrates an encoder-decoder neural network 800 according to one or more embodiments.

Referring to FIG. 8, an encoder 810 and decoder 820 according to one or more embodiments may have a neural network (NN) structure including input layers 8101 and 8201, hidden layers 8102 and 8202, and output layers 8103 and 8203, respectively. In some embodiments, the encoder 810 may have an encoder structure of the generative AI model described above (e.g., AI model 200).

In addition, the decoder 820 may have a decoder structure of the generative AI model described above. The input layers 8101 and 8201, hidden layers 8102 and 8202, and output layers 8103 and 8203 of the encoder 810 and the decoder 820 may each include a respective set of nodes and the strength of connections between each node may correspond to a weight (a connection weight). The nodes included in the input layers 8101 and 8201, the hidden layers 8102 and 8202, and the output layers 8103 and 8203 may be connected to each other with a fully connected type of architecture, as a non-limiting example.

The number of parameters (a weight and a bias) may be equal to the number of connections in the neural network 800. The input layers 8101 and 8201 may include input nodes, and the number of input nodes may correspond to the number of independent input variables therefor, respectively.

For training the encoder 810, an image pair may be input to the input layer 8101. When the image pair is input into the input layer 8101 of the encoder 810, a noise-reduced image pair may be output as the inference result from the output layer 8203 of the trained decoder 820.

The hidden layers 8102 and 8202 may be positioned between the input layers 8101 and 8201 and output layers 8103 and 8203 and may include at least one hidden layer. The output layers 8103 and 8203 may include at least one output node. An activation function may be used in the hidden layers 8102 and 8202 and output layers 8103 and 8203 to determine node outputs/activations. The hidden layers 8102 and 8202 are representative of one or more hidden layers.

In some embodiments, the encoder 810 and the decoder 820 may be trained by updating the weights and/or parameters of the hidden nodes included in the hidden layers 8102 and 8202.

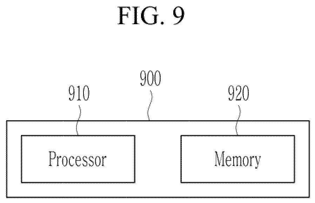

FIG. 9 illustrates a training device according to one or more embodiments.

A training device according to one or more embodiments may be implemented as a computer system (for example, a computer-readable medium). Referring to FIG. 9, the computer system 900 includes one or more processors 910 and a memory 920. The one or more processors 910 is representative of any single processor or any combination of processors, e.g., a CPU, a GPU, an NPU, an accelerator, etc. The memory 920 may be connected to the one or more processors 910 and may store instructions or programs configured to cause the one or more processors 910 to perform a process including any of the methods described above.

The one or more processors 910 may realize functions, stages, or methods proposed in the embodiment. An operation of the computer system 900 according to one or more embodiments may be realized by the one or more processors 910. The one or more processors 910 may include a GPU, a CPU, and/or an NPU. When the operation of the computer system 900 is implemented by the one or more processors 910, each task may be divided among the one or more processors 910 according to load. For example, when one processor is a CPU, the other processors may be a GPU, an NPU, an FPGA, and/or a DSP.

The memory 920 may be provided inside/outside the processor, and may be connected to the processor through various means known to a person skilled in the art. The memory represents a volatile or non-volatile storage medium in various forms (but not a signal per se), and for example, the memory may include a read-only memory (ROM) and a random-access memory (RAM). In another way, the memory may be a PIM (processing in memory) including a logic unit for performing self-contained operations.

In another way, some functions of the training device for the pre-trained AI model may be provided by a neuromorphic chip including neurons, synapses, and inter-neuron connection modules. The neuromorphic chip is a computer device simulating biological neural system structures, and may perform neural network operations.

Meanwhile, the embodiments are not only implemented through the device and/or the method described so far, but may also be implemented through a program that realizes the function corresponding to the configuration of the embodiment or a recording medium on which the program is recorded, and such implementation may be easily implemented by anyone skilled in the art to which this description belongs from the description provided above. Specifically, methods (e.g., the method for training a pre-trained AI model, etc.) according to the present disclosure may be implemented in the form of program instructions that can be performed through various computer means. The computer readable medium may include program instructions, data files, data structures, etc. alone or in combination. The program instructions recorded on the computer readable medium may be specifically designed and configured for the embodiments. The computer readable recording medium may include a hardware device configured to store and execute program instructions. For example, a computer-readable recording medium includes magnetic media such as hard disks, floppy disks and magnetic tapes, optical recording media such as CD-ROMs and DVDs, and optical disks such as floppy disks. It may be magneto-optical media, ROM, RAM, flash memory, or the like. A program instruction may include not only machine language codes such as generated by a compiler, but also high-level language codes that may be executed by a computer through an interpreter or the like.

The computing apparatuses, the electronic devices, the processors, the memories, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the disclosure may also be defined by the claims, and all variations within the scope of the claims are to be construed as being included in the disclosure.

**Claims**

1.    A method for training a pre-trained artificial intelligence (AI) model, the method comprising:

receiving, from the pre-trained AI model, a first image and a second image, wherein the first image and the second image respectively correspond to different domains;
determining a first gradient of a first loss function of the first image and a second gradient of a second loss function of the second image;
determining a similarity between the first gradient and the second gradient; and
updating the pre-trained AI model based on the similarity.

2.    The method of claim 1, wherein the first image corresponds to a pre-training domain of the pre-trained AI model and the second image corresponds to a target domain that is different from the pre-training domain.

3.    The method of claim 1 and/or 2, wherein the determining a first gradient of a first loss function of the first image and a second gradient of a second loss function of the second image comprises:

determining the first gradient from a partial derivative of the first loss function with respect to parameters of layers in the pre-trained AI model; and
determining the second gradient from a partial derivative of the second loss function with respect to the parameters of the layers in the pre-trained AI model.

4. The method of any of the previous claims, wherein the pre-trained AI model comprises layers, and the determining of the similarity between the first gradient and the second gradient comprises
   determining similarity for each layer between the first gradient and the second gradient.

5. The method of claim 4, wherein

   the updating of the pre-trained AI model based on the similarity comprises
   determining a reweighted gradient based on the similarity; and
   updating the parameters of the layers in the pre-trained AI model using the reweighted gradient, wherein, preferably,
   the reweighted gradient is determined as a product of the similarity for each layer and the second gradient.

6. An apparatus for training a pre-trained artificial intelligence (AI) model, the apparatus comprising:
   one or more processors and a memory, wherein the memory stores instructions configured to cause the one or more processors to perform a process comprising:

   receiving image pairs each comprising a first image corresponding to a pre-training domain and a second image corresponding to a target domain from each of a plurality of pre-trained AI models;
   determining similarities between the pre-training domain and the target domain based on the respective image pairs; and
   selecting at least one pre-trained AI model from among the plurality of pre-trained AI models by comparing the similarities respectively corresponding to each of the plurality of pre-trained AI models to update the selected at least one pre-trained AI model.

7. The apparatus of claim 6, wherein the determining of the similarities between the target domain and the pre-training domains based on the respective image pairs comprises, for each pair:

   determining a first gradient of a first loss function of the first image and a second gradient of a second loss function of the second image; and
   determining a similarity between the first gradient and the second gradient.

8. The apparatus of claim 7, wherein

   the selecting of at least one pre-trained AI model from among the plurality of pre-trained AI models by comparing the similarities respectively corresponding to each of the plurality of pre-trained AI models comprises
   selecting the pre-trained AI model corresponding to the greatest similarity.

9. The apparatus of claim 8, wherein the process further includes updating the selected pre-trained AI model based on the greatest similarity.

10. The apparatus of claim 7 or 8, wherein the determining of the first gradient of the first loss function of the first image and the second gradient of the second loss function of the second image comprises:

    determining the first gradient from a partial derivative of the first loss function with respect to parameters of layers in the pre-trained AI model; and
    determining the second gradient from a partial derivative of the second loss function with respect to parameters of layers in the pre-trained AI model.

11. The apparatus of any of claims 7 to 10, wherein

    the determining of the similarities between the pre-training domain and the target domain based on the respective image pairs comprises
    calculating a cosine similarity for each layer between the first gradient and the second gradient.

12. The apparatus of claim 11, wherein the updating of the selected pre-trained AI model based on having the greatest similarity comprises:

    determining a reweighted gradient based on the cosine similarity for each layer between the first gradient and the second gradient; and

updating the parameters of the layers in the selected pre-trained AI model using the updated gradient;

wherein, preferably, the updating of the selected pre-trained AI model further comprises determining the reweighted gradient based on a product of the cosine similarity for each layer and the second gradient.

13. A system for training an artificial intelligence (AI) model that has been pre-trained in a pre-training domain to learn a target domain that is different from the pre-training domain, the system comprising:

one or more processors; and memory,

wherein the memory stores instructions configured to cause the one or more processors to perform a process including:

receiving, from the AI model, a first image in the pre-training domain and a second image in the target domain; determining a correlation value indicating a correlation between the pre-training domain and the target domain based on the first image in the pre-training domain and the second image in the target domain; and performing tuning to adapt the AI model to the target domain based on the correlation value.

14. The system of claim 13, wherein determining the correlation value comprises determining a similarity between a first gradient of a first loss function of the first image and a second gradient of a second loss function of the second image, wherein, preferably:

the first gradient is determined from a partial derivative of the first loss function with respect to parameters of layers in the AI model; and

the second gradient is determined from a partial derivative of the second loss function with respect to the parameters of the layers of the AI model; and/or

wherein preferably similarities between the first gradient and the second gradient are determined for the respective layers.

15. The system of any of claims 13 to 14, wherein the second gradient relates to the target domain, and wherein performing tuning to adapt the AI model to the target domain based on the correlation value comprises:

updating gradient based on the similarity for each layer; and

updating the parameters of the layers in the AI model using the updated gradient; and

wherein, preferably, the updated gradient is determined based on a multiplication of the similarity for each layer and the second gradient.

# FIG. 1

Noise image

AI model — 200

Image of pre-training domain

Image of new domain

Gradient calculator — 110

$$\frac{\partial \mathcal{L}^{prev}}{\partial \theta} \qquad \frac{\partial \mathcal{L}^{new}}{\partial \theta}$$

Similarity calculator — 120

$$w_l$$

Parameter updater — 130

100

$$w_l \cdot \frac{\partial \mathcal{L}^{new}}{\partial \theta_l}$$

# FIG. 2

# FIG. 3

Start

Calculate gradient of loss function of image of pre-training domain and calculate gradient of loss function of image of new domain — S110

Calculate similarity between gradients of loss function of pre-training domain and new domain — S120

Calculate reweighted gradient based on similarity between gradients — S130

Update parameters of pre-trained AI model based on reweighted gradient — S140

End

# FIG. 4

Noise image

$200_1$ — AI model$_1$ · · · AI model$_n$ — $200_n$

Gradient calculator — 110

Similarity calculator — 120

Model determinator — 140

Parameter updater — 130

100

# FIG. 5

Start

Calculate gradients of loss functions of images of pre-training domain and new domain generated by a plurality of pre-trained AI models ～ S210

Calculate similarity between gradients of loss functions functions of image pair generated by a plurality of pre-trained AI models ～ S220

Select at least one pre-trained AI model from a plurality of pre-trained AI models based on similarity between gradients of loss functions of image pair ～ S230

Calculate reweighted gradient based on similarity between gradients of loss functions of selected pre-trained AI model ～ S240

Update parameters of selected pre-trained AI model using reweighted gradient ～ S250

End

FIG. 6

# FIG. 7

FIG. 8

# FIG. 9

Europäisches
Patentamt
European
Patent Office
Office européen
des brevets

# EUROPEAN SEARCH REPORT

**Application Number**

EP 25 15 0247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINGYUAN ZHU ET AL: "DomainStudio: Fine-Tuning Diffusion Models for Domain-Driven Image Generation using Limited Data", ARXIV.ORG, CORNELL UNIVERSITY LIBRARY, 201 OLIN LIBRARY CORNELL UNIVERSITY ITHACA, NY 14853, 1 August 2023 (2023-08-01), XP091582215, * page 1 - page 10 * * page 14 * * page 26 - page 27 * ----- | 1-15 | INV. G06N3/0455 G06N3/0475 G06N3/084 G06N3/096 ADD. G06N3/047 |
| X | CEDRIC RENGGLI ET AL: "Which Model to Transfer? Finding the Needle in the Growing Haystack", ARXIV.ORG, CORNELL UNIVERSITY LIBRARY, 201 OLIN LIBRARY CORNELL UNIVERSITY ITHACA, NY 14853, 13 October 2020 (2020-10-13), XP091168218, * Appendix H; page 1 - page 8; figures 1-2; table 6 * ----- | 6-12 | |
| A | YUNSHU DU ET AL: "Adapting Auxiliary Losses Using Gradient Similarity", ARXIV.ORG, CORNELL UNIVERSITY LIBRARY, 201 OLIN LIBRARY CORNELL UNIVERSITY ITHACA, NY 14853, 25 November 2020 (2020-11-25), XP081822618, * the whole document * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| The Hague | 19 May 2025 | Cilia, Elisa |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 15 0247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Igarashi Hiroaki ET AL: "Multi-task Curriculum Learning Based on Gradient Similarity", , 31 December 2022 (2022-12-31), XP093277049, Retrieved from the Internet: URL:https://bmvc2022.mpi-inf.mpg.de/0705.pdf [retrieved on 2025-05-14] * the whole document * ----- | 1-15 | |
| A | Jaakkola Tommi S ET AL: "Exploiting generative models discriminative classifiers", , 1 December 1998 (1998-12-01), XP093277390, Retrieved from the Internet: URL:https://papers.nips.cc/paper/1520-exploiting-generative-models-in-discriminative-classifiers.pdf [retrieved on 2025-05-14] * the whole document * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 19 May 2025 | Cilia, Elisa |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.....................................................................................
& : member of the same patent family, corresponding
     document

EPO FORM 1503 03.82 (P04C01)